# FASCICULE DE BREVET EUROPEEN

(11) **EP 3 123 142 B1**
(45) Date de publication et mention de la délivrance du brevet: **07.11.2018**
(21) Numéro de dépôt: 15712853.9
(22) Date de dépôt: 20.03.2015
(51) Int. Cl.: G01N 1/22, G01N 1/02

(54) **DISPOSITIF DE PRELEVEMENT D'AEROSOLS ET D'IODE GAZEUX**
VORRICHTUNG ZUR PROBENNAHME VON AEROSOLEN UND GASFÖRMIGEM JOD
DEVICE FOR SAMPLING AEROSOLS AND GASEOUS IODINE

(30) Priorité: 24.03.2014 FR 1452452
(43) Date de publication de la demande: 01.02.2017
(73) Titulaire: Institut de Radioprotection et de Sûreté Nucléaire, 92260 Fontenay aux Roses (FR)
(72) Inventeur: MASSON, Olivier, F-04100 Manosque (FR)
(74) Mandataire: Regimbeau
(86) Numéro de dépôt international: PCT/EP2015/056020
(87) Numéro de publication internationale: WO 2015/144604

(56) Documents cités:
- DE-A1- 4 114 400
- FR-A1- 2 234 636
- US-A- 2 556 498
- DATABASE WPI Week 201303 Thomson Scientific, London, GB; AN 2013-A15018 XP002733508, -& CN 202 485 950 U (ELECTRIC POWER SCI INST SHANXI PROVINCE) 10 octobre 2012 (2012-10-10)
- DATABASE WPI Week 199127 Thomson Scientific, London, GB; AN 1991-199910 XP002733509, -& SU 1 605 165 A (BELGOROD CONS MAT) 7 novembre 1990 (1990-11-07)

## Description

### DOMAINE DE L'INVENTION

Le domaine de l'invention est celui du prélèvement d'aérosols et d'iode gazeux dans l'air, afin notamment de surveiller les niveaux de concentration et l'évolution de leurs quantités respectives.

### ETAT DE LA TECHNIQUE

Les systèmes de prélèvement d'aérosols et d'iode contenus dans l'air sont utilisés notamment pour surveiller le bon fonctionnement d'installations, comme des centrales nucléaires. En effet, parmi les aérosols contenus dans l'air certains sont marqués par des radionucléides d'origine naturelle ou artificielle. Le prélèvement des aérosols permet d'évaluer les niveaux de concentrations des différents radionucléides et détecter une éventuelle anomalie. Certains radionucléides sont également susceptibles d'être rejetés sous forme de gaz. C'est le cas de l'iode 131, qui est l'un des premiers éléments radioactifs susceptible d'être rejeté dans l'atmosphère en cas d'accident nucléaire, compte tenu de sa volatilité. De plus, sa demi-vie de 8 jours est suffisamment courte pour indiquer, en cas de détection de ce radionucléide, qu'un rejet relativement récent a eu lieu.

Des systèmes connus permettent de prélever à la fois des aérosols et de l'iode gazeux pour surveiller la radioactivité ambiante de l'air.

De tels systèmes comprennent une pompe à débit contrôlé, un filtre à particules ainsi qu'une cartouche remplie d'un matériau adsorbant adapté pour piéger l'iode présent dans l'air. En particulier, le document DE 41 14 400 A1 divulgue un système de prélèvement d'aérosols et d'iode gazeux dans une atmosphère, comprenant un conduit, une pompe, un filtre pour retenir des aérosols, une cartouche de piégeage, des moyens de chauffage et un condensateur. Les prélèvements sont réalisés pendant une période de temps donnée, puis le filtre à particules d'une part et la cartouche de piégeage de l'iode d'autre part, sont analysés pour déterminer les niveaux de concentration moyens, pendant la durée du prélèvement.

Les développements en matière de sûreté nucléaire dans les installations nucléaires tendent à réduire les rejets dans l'atmosphère d'éléments radioactifs.

En conséquence, il importe de pouvoir diminuer les limites de détection de façon 1) à mettre en évidence le cas échéant une diminution des niveaux ambiants qui en résulterait et 2) de préciser les valeurs obtenues de manière significative même pour des valeurs de concentration très basses.

Toutefois lorsque l'humidité de l'air ambiant est élevée, l'efficacité de la cartouche de piégeage de l'iode diminue.

En effet, une cartouche de matériau adsorbant pour le piégeage de l'iode peut se charger en eau au détriment de sa capacité de piégeage en iode.

Ceci dégrade la limite de détection d'iode puisqu'il n'est alors plus possible de collecter efficacement l'iode contenu dans l'air au cours de la période de prélèvement.

On peut par ailleurs noter à titre annexe que l'humidité de l'air est également susceptible de dégrader la collecte des aérosols, car il est possible qu'une pellicule d'eau se forme sur le filtre à particules ou sur les particules déjà accumulées à sa surface, et provoque le colmatage prématuré de ce filtre. Pour résoudre cette problématique, il a été proposé de chauffer le filtre à particules par rayonnement pour l'assécher par exemple au moyen de tubes halogènes ou de résistances infrarouges, mais le chauffage qui en résulte est hétérogène et peut provoquer des brûlures localisées du filtre.

Les solutions proposées jusqu'à présent pour améliorer l'efficacité de prélèvement de tels systèmes se sont donc révélées dans l'ensemble insuffisantes.

### PRESENTATION DE L'INVENTION

Le but de l'invention est de proposer un système de prélèvement d'aérosols et d'iode gazeux dont l'efficacité de collecte de l'iode ne soit pas diminuée du fait de l'humidité de l'air traité.

A cet égard, l'invention a pour objet un système de prélèvement d'aérosols et d'iode gazeux contenus dans une atmosphère selon la revendication 1.

Avantageusement, mais facultativement, le système selon l'invention comprend en outre au moins l'une des caractéristiques suivantes :
- le système de régulation est adapté pour commander le dispositif de chauffage de l'air pour maintenir le taux d'humidité de l'air s'écoulant dans le conduit de circulation de l'air inférieur à un niveau déterminé.
- le niveau du taux d'humidité fixé par le système de régulation est compris entre 10 et 40 %, et de préférence inférieur ou égal à 30 %.
- la pompe du module de prélèvement d'iode est à débit variable, ledit débit étant fixé en fonction de la cartouche de piégeage d'iode utilisée.
- le module de prélèvement d'aérosols comprend en outre un organe de commande de la pompe, un débitmètre, et une unité de commande, configurée pour moduler un débit de consigne de la pompe en fonction d'un taux de colmatage du filtre.
- le dispositif de chauffage de l'air s'écoulant dans le conduit de circulation comprend un tube s'étendant le long d'une portion dudit conduit, et un manchon chauffant entourant ledit tube sur une portion de celui-ci.
- le manchon chauffant comprend une résistance chauffante ou est chauffé par induction.
- le tube du dispositif de chauffage de l'air comprend une pluralité de veines d'écoulement d'air de section identique et réparties de manière homogène sur la section du tube.
- les veines d'écoulement d'air du tube du dispositif de chauffage de l'air présentent une configuration en nid d'abeille.
- le module de prélèvement d'iode comprend en outre deux électrovannes, positionnées respectivement en entrée et en sortie de la cartouche de prélèvement de l'iode, lesdites électrovannes étant adaptées pour isoler la cartouche pour la protéger de l'humidité de l'air ambiant lorsqu'aucun prélèvement n'a lieu.
- le module de prélèvement d'iode comprend en outre une unité de commande configurée pour contrôler les électrovannes pour sélectivement isoler ou mettre en communication la cartouche avec les conduits disposés en entrée et en sortie de la cartouche.
- le conduit de circulation d'air comprend une paroi interne revêtue d'une couche de matériau anti-adhérent.
- le dispositif de prélèvement d'aérosols comprend en outre un dispositif de chauffage de l'air traversant le filtre.
L'invention a également pour objet un procédé de prélèvement d'aérosols et d'iode gazeux contenus dans une atmosphère selon la revendication 14.

Avantageusement, mais facultativement, le procédé de prélèvement selon l'invention est mis en oeuvre dans un système dans lequel le module de prélèvement d'iode comprend en outre deux électrovannes, positionnées respectivement en entrée et en sortie de la cartouche de prélèvement de l'iode, lesdites électrovannes étant adaptées pour isoler la cartouche pour la protéger de l'humidité de l'air ambiant lorsqu'aucun prélèvement n'a lieu, ainsi qu'une unité de commande configurée pour contrôler les électrovannes pour sélectivement isoler ou mettre en communication la cartouche avec les conduits disposés en entrée et en sortie de la cartouche, et le procédé comprend en outre :
- lors du prélèvement, l'ouverture d'électrovannes pour mettre en communication la cartouche avec les conduits disposés en entrée et en sortie de la cartouche, et
- après le prélèvement, la fermeture desdites électrovannes pour isoler hermétiquement la cartouche des conduits.

La présence d'un dispositif de chauffage dans la voie de prélèvement d'iode permet de diminuer l'humidité relative et la condensation de vapeur d'eau à l'intérieur du piège et donc au niveau de la cartouche d'adsorbant utilisée pour piéger le gaz.

Cette diminution de l'humidité relative se fait selon une régulation et permet ainsi de maitriser les conditions de piégeage de l'iode gazeux et offre la garantie d'une mesure représentative de la teneur en iode dans l'air ambiant et quel que soit le degré d'humidité.

### DESCRIPTION DES FIGURES

D'autres caractéristiques, buts et avantages de la présente invention apparaîtront à la lecture de la description détaillée qui va suivre, au regard des figures annexées, données à titre d'exemples non limitatifs et sur lesquelles :
- La figure 1 représente un système de prélèvement d'aérosols et d'iode contenus dans l'air,
- La figure 2 représente un dispositif de prélèvement d'aérosols faisant partie du système de la figure 1,
- La figure 3a représente la boucle de prélèvement d'iode du système de la figure 1,
- La figure 3b représente le détail du dispositif de chauffage de l'air s'écoulant dans la boucle de prélèvement d'iode.

### DESCRIPTION DETAILLEE D'AU MOINS UN MODE DE REALISATION DE L'INVENTION

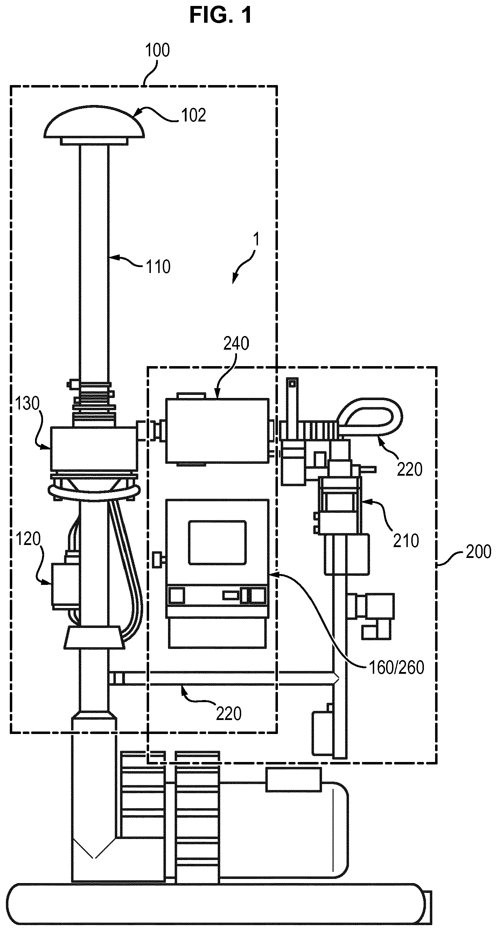

On a représenté en référence à la figure 1 un système 1 de prélèvement d'aérosols et d'iode contenus dans une atmosphère dans lequel le système est plongé. Une utilisation classique de ce système est l'étude des concentrations des composés sous forme particulaire et de l'iode gazeux contenus dans l'air ambiant, dans lequel le système est alors placé.

Ce système comporte deux parties principales reliées entre elles, les deux parties étant un dispositif de prélèvement d'aérosols dans l'air 100, et un module de prélèvement d'iode gazeux 200.

On va maintenant décrire plus en détails le dispositif de prélèvement d'aérosols 100. Ce dispositif peut, comme indiqué, faire partie du système 1, mais peut également être un dispositif indépendant, c'est-à-dire qui n'est pas raccordé à un module de prélèvement d'iode.

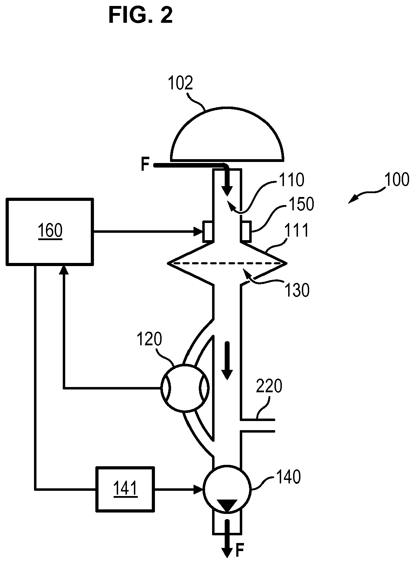

En référence à la figure 2, le dispositif de prélèvement d'aérosols dans l'air 100 comporte un conduit 110 d'alimentation en air du système, en communication de fluide avec l'atmosphère dans laquelle baigne le système, formant l'arrivée d'air du dispositif 110 et le cas échéant du système 1.

Le conduit 110 d'alimentation s'étend avantageusement verticalement quand le dispositif est disposé sur le sol, et le dispositif 100 comprend avantageusement une protection 102 de l'embouchure du conduit, comprenant une pluralité d'orifices assurant la communication de fluide entre le conduit et l'atmosphère, mais évitant l'aspiration de macro débris, d'insectes ou de liquides, typiquement de pluie, à l'intérieur du conduit.

Le dispositif de prélèvement des aérosols comprend également une pompe 140 adaptée pour prélever de l'air à un débit d'air déterminé et faire circuler ledit débit d'air dans le conduit 110 d'alimentation.

Avantageusement, mais facultativement, le pompage d'air via la pompe140 est à débit variable, entre 50 et 100 m³.h⁻¹. Un débitmètre 120, de préférence massique, effectue la mesure du débit dans une dérivation du conduit 110, en amont de la pompe 140. Le fonctionnement de la pompe (son débit) est asservi à la mesure du débitmètre 120.

Dans une section du conduit 110 est disposé un filtre 130, adapté pour retenir les aérosols contenus dans l'air parcourant le conduit et traversant le filtre.

Avantageusement, comme représenté sur la figure 2, le filtre 130 (typiquement circulaire) s'étend le long d'une surface transversale du conduit et est avantageusement d'un diamètre correspondant au diamètre intérieur du conduit 110 afin d'occuper toute une section du conduit.

Par exemple, le filtre 130 peut présenter un diamètre compris entre 100 et 150 mm, et de préférence compris entre 120 et 130 mm. En amont du filtre, un divergent 111 permet d'augmenter localement la section du conduit de 50 à 130 mm (pour un filtre de 130 mm de diamètre).

Le diamètre du filtre - et donc le diamètre intérieur du conduit - est avantageusement adapté au débit de la pompe pour traiter un débit d'air le plus élevé possible, sans toutefois excéder une valeur limite correspondant typiquement à une vitesse au niveau du filtre de 2 m/s.

Le filtre 130 se présente comme cela est connu sous la forme d'un média fibreux permettant le passage de l'air tout en retenant les aérosols. Il peut être constitué par exemple de fibres de verre, par exemple de type mat (non tissé), ou de fibres d'un type différent (quartz, polypropylène, etc.).

Selon un aspect avantageux mais facultatif de l'invention, qui peut être mis en oeuvre indépendamment des moyens particuliers de mesure d'iode gazeux qui vont être décrits plus bas dans ce texte, le dispositif de prélèvement des aérosols 100 comprend un dispositif 150 de chauffage de l'air arrivant sur le filtre 130, permettant de réduire l'humidité relative de l'air et de limiter le colmatage du filtre consécutif à la formation d'une pellicule d'eau quand l'air ambiant présente un taux d'humidité élevé. Ce dispositif comporte un collier chauffant 150 placé à l'amont du filtre pour amener la température de l'air au-dessus du point de rosée. L'action de chauffage est asservie à une mesure de l'humidité de l'air dans le conduit 110 en amont du filtre 130. A cet effet, le dispositif comprend un capteur d'humidité placé dans la patrie du conduit 110 qui est en amont du filtre 130. Ce capteur d'humidité (non représenté sur les figures) est relié à une unité de contrôle 160. L'unité de contrôle 160 comprend des moyens de traitement, typiquement un processeur pour traiter des données du capteur et commander d'autres éléments du système, comme décrit ci-après.

Lorsque l'humidité mesurée de l'air atteint ou excède une valeur limite supérieure, le collier chauffant, également relié à l'unité de commande 160 qui le contrôle, est activé par cette unité de contrôle pour augmenter le chauffage de l'air dans le conduit 110.

Le dispositif de chauffage est configuré pour chauffer à la fois l'intérieur du conduit et les éléments métalliques situés autour ou à proximité du filtre 130 (divergent, porte filtre).

Une partie du chauffage va donc réchauffer par conduction le porte-filtre, réalisé dans un matériau conducteur de chaleur. Aucun chauffage n'est appliqué directement au filtre (celui-ci n'est pas mis en contact directement avec des éléments de la source de chaleur).

Grâce à ce chauffage régulé, le risque de colmatage du filtre est limité. D'autre part le fait que le chauffage soit appliqué au porte-filtre, et non directement au filtre, permet d'éviter d'endommager le filtre par le chauffage ce qui permet donc de traiter un débit d'air important.

Dans le cas où le dispositif de prélèvement d'aérosols fait partie d'un système 1 de prélèvement d'iode et d'aérosols, l'unité de contrôle 160 contrôle l'ensemble du système, à savoir le dispositif de prélèvement d'aérosols dans l'air 100, et un module de prélèvement d'iode gazeux 200.

En aval du filtre par rapport au flux d'air s'écoulant dans le conduit 110, représenté sur la figure 2 par les flèches F, l'air est donc dépourvu d'aérosols. Le débit d'air circulant dans le conduit 110 étant contrôlé par la pompe 140, on peut, en récupérant les aérosols retenus par le filtre à l'issue d'une période d'utilisation donnée du système, déterminer la concentration en aérosols et en composés sous forme particulaire de l'air ambiant.

Comme indiqué précédemment, le débit de la pompe 140 est asservi à la mesure du débitmètre 120. Plus précisément, l'unité de contrôle 160 fixe un débit de contrôle que la pompe 140 doit respecter. La pompe 140 comprend en outre un organe de commande 141 modulant sa vitesse de rotation pour atteindre le débit de contrôle.

Avantageusement, l'organe de commande 141 comprend un potentiomètre, par exemple un potentiomètre numérique, couplé à un variateur de fréquence. Le potentiomètre délivre une tension de sortie variable entre une tension nulle et une tension maximale. Cette tension est appliquée à un variateur de fréquence commandant la vitesse de la pompe de sorte que plus la tension est élevée, plus la vitesse de rotation de la pompe est élevée et donc le débit est important.

Avantageusement, mais facultativement, l'unité de contrôle 160 module le débit de contrôle en fonction d'un degré de colmatage du filtre 130, et ce afin de retarder l'échéance de colmatage complet du filtre, nécessitant le remplacement de celui-ci.

Pour ce faire, lorsqu'une valeur de la tension délivrée par le potentiomètre est trop importante, correspondant à une vitesse de rotation de la pompe trop importante, l'unité de contrôle 160 diminue le débit de contrôle pour ralentir la vitesse de la pompe.

Selon le mode de réalisation préféré dans lequel l'organe de commande 141 comprend un potentiomètre numérique, le potentiomètre est codé sur 255 niveaux.

A la mise en place d'un filtre 130 vierge, l'unité de contrôle 160 impose à la pompe 140 un premier débit de consigne maximal, par exemple 80m³/h, pour lequel le potentiomètre se trouve à un niveau moyen, par exemple 150.

Au fur et à mesure de l'encrassement progressif du filtre, le débit de la pompe 140 diminue et donc le niveau du potentiomètre augmente pour faire accélérer le débit de la pompe et atteindre le débit de consigne.

Lorsque le niveau du potentiomètre atteint une valeur seuil, par exemple 250, l'unité de contrôle 160 diminue la valeur du débit de contrôle de la pompe 140. Par exemple, le débit de contrôle passe de 80 m³/h à 70 m³/h. La pompe peut alors tourner moins vite pour atteindre le débit de consigne et le niveau du potentiomètre diminue.

Les particules continuent néanmoins de s'accumuler sur le filtre, et à nouveau le niveau du potentiomètre peut atteindre la valeur seuil. Alors l'unité de contrôle 160 impose une nouvelle réduction du débit de consigne, par exemple à 60 m³/h, pour faire à nouveau chuter le niveau du potentiomètre.

Avantageusement, lorsque le niveau du potentiomètre atteint une nouvelle fois la valeur seuil, l'unité de contrôle 160 ne modifie plus le débit de contrôle mais arrête la pompe car cela signifie que le filtre a atteint un degré de colmatage élevé et qu'une dégradation supplémentaire du débit entrainerait pour la pompe un effort trop soutenu, risquant de l'endommager. A ce stade il faut alors remplacer le filtre par un filtre neuf.

De retour à la figure 1, le module de prélèvement d'iode gazeux 200 du système 1 est raccordé par une conduite 220 au conduit 110 d'alimentation en air, en aval du filtre 130 par rapport au flux d'air, et en amont de la pompe 140.

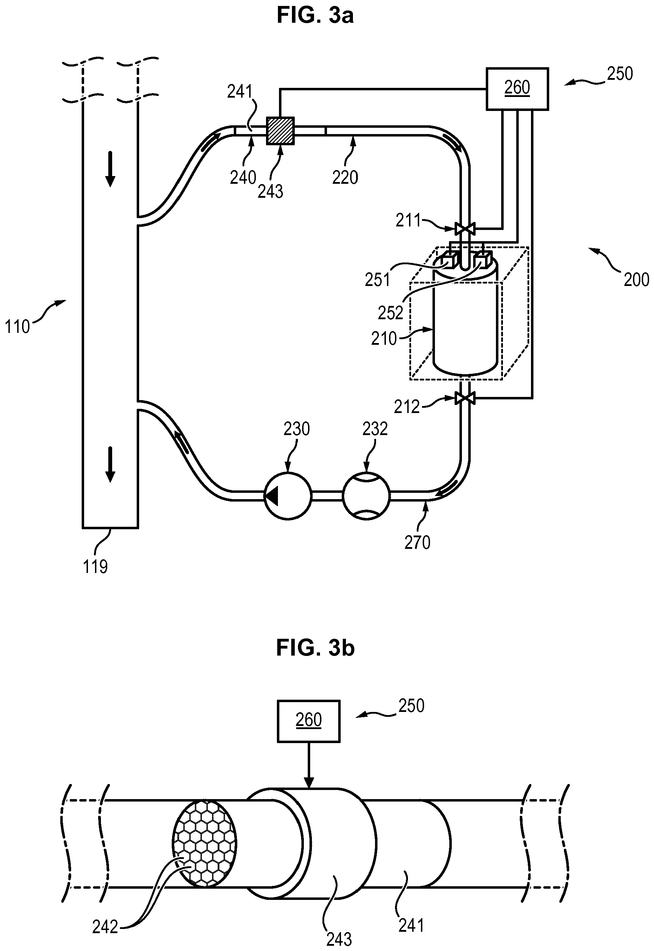

En référence à la figure 3a, ce module 200 est ainsi organisé autour d'une boucle ou conduit 220 de circulation de l'air prélevé sur le conduit 110 après la traversée du filtre 130. La boucle 220 est associée à une pompe 230 qui lui est dédiée, pour forcer la circulation de l'air dans le sens voulu (sens des aiguilles d'une montre dans le cas de la figure 3a).

La boucle 220 comporte un piège 210 dans lequel est insérée une cartouche d'adsorbant pour le piégeage de l'iode gazeux contenu dans l'air s'écoulant au travers de ladite cartouche. A cet égard, la cartouche comporte une quantité de matériau adsorbant tel que par exemple du charbon actif.

Ce piège 210 est relié au conduit d'alimentation en air 110 du système par le conduit de circulation 220.

Avantageusement, mais facultativement, le piège pourra accueillir deux cartouches montées en série, ou sera dédoublé de façon à pouvoir disposer deux cartouches en série, dans le but de déterminer le rendement de piégeage de l'ensemble et de vérifier si la première cartouche a été saturée ou non.

Le module 200 comprend également une pompe 230 adaptée pour prélever une fraction de l'air filtré depuis le conduit d'admission d'air, en aval du filtre 130, avec un débit d'air déterminé, et pour faire circuler ledit débit d'air dans le conduit 220 puis dans la cartouche 210.

La pompe 230 est avantageusement à débit d'air variable et régulé, de préférence entre 1 et 7 m³.h⁻¹, de préférence entre 2 et 6 m³.h⁻¹.

De préférence, le débit de la pompe est fixé dans cette plage par un opérateur lors de l'installation d'une nouvelle cartouche 210, en fonction du type de cartouche sélectionnée. En effet, en fonction du type de matériau adsorbant contenu dans la cartouche et de la géométrie de la cartouche, le temps de contact nécessaire entre l'air et le matériau adsorbant pour que l'adsorption ait lieu peut varier. Il est donc nécessaire d'ajuster le temps de passage de l'air en fonction de la cartouche utilisée, et donc le débit de la pompe.

Une partie de l'air ayant traversé le filtre 130 circule dans la boucle 220 et donc dans la cartouche pour que l'iode qu'il contient soit piégé. Le débit d'air circulant dans le conduit 220 étant contrôlé par la pompe 230, il est possible, en mesurant la quantité d'iode piégée dans la cartouche à l'issue d'une période de temps donnée, d'en déduire la concentration en iode gazeux de l'air ambiant.

A cet égard, le conduit de circulation 220 reliant le conduit d'alimentation en air 210 à la cartouche de piégeage de l'iode 210 est avantageusement composé ou constitué ou recouvert sur sa paroi interne d'un matériau anti-adhérent tel que du Teflon®, pour éviter que de l'iode se dépose sur les parois du conduit 220, et qu'il ne soit pas piégé par la cartouche et donc pris en compte pour la mesure.

Le module de prélèvement d'iode 200 comprend en outre en amont de la cartouche 210 un dispositif de chauffage 240 de l'air s'écoulant dans le conduit de circulation 220, et ce afin de diminuer l'humidité relative de l'air, pour éviter une compétition entre le piégeage de l'iode et celui de vapeur d'eau au niveau du matériau adsorbant contenu dans la cartouche 210.

Comme représenté plus en détails en figure 3b, le dispositif 240 de chauffage de l'air comprend un tube 241 s'étendant sur une portion du conduit de circulation 220. Le tube 241 est alvéolé ou en nid d'abeille, c'est-à-dire qu'il comporte une pluralité de veines 242 parallèles d'écoulement d'air et de section, par exemple polygonales, de préférence hexagonales, pour favoriser l'échange de chaleur entre le dispositif et l'air et l'obtention d'une température d'air homogène sur toute la section du tube 241. Ces veines 242 sont avantageusement de sections identiques et distribuées de façon homogène dans la section du tube 241 pour améliorer encore l'homogénéité de la température de l'air.

En outre, le dispositif 240 de chauffage de l'air comprend un manchon 243 chauffant, entourant le tube sur une section de celui-ci. Le manchon 243 chauffe avantageusement le tube 241 par conduction thermique. Par conséquent, il est avantageux que le manchon et le tube soient réalisés en des matériaux thermiquement conducteurs. Ainsi, le tube est chauffé de façon homogène dans toutes les alvéoles pour permettre que l'air s'écoulant dans chaque veine 242 soit porté à la même température.

Le manchon 243 peut, pour chauffer, comprendre une résistance électrique ou être chauffé par induction électromagnétique.

En outre, le module 200 de prélèvement d'iode gazeux comprend un capteur d'humidité 252 de l'air dans le conduit 220, au niveau du piège 210 dans lequel est insérée la cartouche (et immédiatement en amont de celle-ci).

Le module 200 comprend également un système de régulation 250 de l'humidité relié au dispositif de chauffage 240, et apte à le contrôler, en fonction de la valeur de l'humidité mesurée pour l'air au niveau de la cartouche. Ici encore, plus l'air est humide plus le chauffage sera important.

Cette régulation permet de ramener le taux d'humidité relative de l'air traversant la cartouche à un niveau seuil, afin de garantir ainsi l'efficacité maximale de l'adsorbant. Avantageusement, le taux d'humidité seuil est de préférence compris entre 10 et 40%, plus préférablement inférieur ou égal à 30 %.

Un taux d'humidité inférieur à 30 % évite le piégeage de vapeur d'eau dans le matériau adsorbant contenu dans la cartouche 210 et la condensation de vapeur d'eau sur les parois internes du piège contenant la cartouche 210 sans nécessiter une consommation d'énergie élevée pour chauffer le manchon.

En outre, le système de régulation 250 comprend une unité de traitement 260, comprenant typiquement un processeur, configurée pour moduler la température du manchon 243 en fonction du taux d'humidité de l'air dans le piège, pour maintenir ce taux d'humidité en deçà d'un seuil déterminé. Ainsi par exemple, si le taux d'humidité de l'air est trop élevé, l'unité de traitement 260 augmente la température du manchon.

Ce système comporte également un capteur de température 251 de l'air circulant au niveau du piège à iode 210, juste en amont de la cartouche, avantageusement mais facultativement jumelé au capteur d'humidité 252. Ces deux capteurs sont reliés à l'unité 260. Associée à cette mesure de température, une sécurité thermique est placée sur le tube afin de se prémunir de tout emballement (c'est-à-dire que le dispositif de chauffage 240 est temporairement désamorcé tant que la température mesurée par le capteur 251 mesure une température excédant un seuil donné).

De retour à la figure 1, dans un système de prélèvement d'iode et d'aérosols, l'unité de traitement 260 est avantageusement confondue avec l'unité de contrôle 160 du système.

Lorsque la voie 220 de prélèvement d'iode 200 est fermée (indépendamment de la voie aérosol) avant un prélèvement ou lors de la conservation de l'échantillon de la cartouche 210 après un prélèvement, et afin de protéger la cartouche 210 contenant le matériau adsorbant lorsque le taux d'humidité de l'air dans le conduit 220 est supérieur au seuil prédéterminé (par exemple lorsque le chauffage vient d'être enclenché), des vannes, de préférence électriques, 211 et 212 sont disposées dans le conduit, respectivement en amont et en aval de la cartouche, dans le sens du flux d'air.

Lorsque le prélèvement est désiré, les électrovannes 211 et 212 s'ouvrent et la pompe 230 est mise en fonctionnement. L'ouverture, la fermeture et la mise en fonctionnement sont pilotées par l'unité de traitement 260.

La cartouche 210 est elle-même positionnée dans un logement hermétique et étanche (représenté en pointillés sur la figure 3a), dont les seules communications de fluide sont fermées par les électrovannes 211 et 212. Ces vannes étant fermées lorsque la cartouche n'est pas utilisée et que la pompe ne fonctionne pas, elles ne sont ouvertes que pour l'utilisation de la cartouche. Ceci permet de maintenir la cartouche 210 à l'abri de l'humidité, et ainsi de préserver son rendement de piégeage nominal, même si elle n'est pas utilisée rapidement après son positionnement dans le système de prélèvement.

Enfin, en sortie de la cartouche 210, le module de prélèvement d'iode comprend une portion 270 d'évacuation de l'air traité dans laquelle est intégré avantageusement un débitmètre 232 de préférence massique, placé entre la cartouche d'adsorbant et le raccordement aval du conduit 220 de circulation au conduit d'alimentation 110 et en amont de la pompe 140.

Le module de prélèvement d'iode proposé permet donc de réguler le taux d'humidité de l'air parvenant sur la cartouche d'adsorbant, tout en maîtrisant la quantité d'énergie consommée, pour garantir les mesures de concentration d'iode les plus représentatives possibles des concentrations ambiantes.

## Revendications

1. Système (1) de prélèvement d'aérosols et d'iode gazeux contenus dans une atmosphère comprenant :
- un dispositif (100) de prélèvement d'aérosols comprenant :
∘ un conduit (110) d'alimentation en air, en communication de fluide avec l'atmosphère,
∘ une première pompe (140) adaptée pour prélever et faire circuler un flux d'air principal avec un débit d'air principal dans ledit conduit,
∘ un filtre (130) disposé dans ledit conduit et adapté pour retenir des aérosols contenus dans le flux d'air principal traversant ledit filtre, et
- un module de prélèvement d'iode (200), comprenant :
∘ une cartouche (210) de piégeage d'iode contenant une quantité de matériau adsorbant,
∘ un conduit de circulation d'air (220), raccordé au conduit d'alimentation en air (110) en aval du filtre (130) par rapport au flux d'air principal, et s'étendant entre ledit conduit et la cartouche, le conduit (220) formant une boucle de circulation d'air en aval du filtre (130) séparément du conduit d'alimentation en air (110),
∘ une deuxième pompe (230) adaptée pour prélever un flux d'air secondaire avec un débit d'air secondaire, au sein du flux d'air principal circulant dans le conduit d'alimentation en air (110), et faire circuler ledit débit secondaire dans le conduit de circulation (220) et la cartouche (210),
∘ un dispositif de chauffage (240) de l'air s'écoulant dans le conduit de circulation d'air (220), et
∘ un système de régulation (250) du taux d'humidité de l'air circulant dans le conduit de circulation d'air (220), ledit système étant adapté pour commander le dispositif de chauffage (240) de l'air s'écoulant dans ledit conduit en fonction du taux d'humidité de l'air.

2. Système (1) de prélèvement selon la revendication 1, dans lequel le système de régulation (250) est adapté pour commander le dispositif de chauffage de l'air (240) pour maintenir le taux d'humidité de l'air s'écoulant dans le conduit de circulation (220) de l'air inférieur à un niveau déterminé.

3. Système (1) de prélèvement selon la revendication 2, dans lequel le niveau du taux d'humidité fixé par le système de régulation (250) est compris entre 10 et 40 %, et de préférence inférieur ou égal à 30 %.

4. Système (1) de prélèvement selon l'une des revendications précédentes, dans lequel la deuxième pompe (230) du module de prélèvement d'iode (200) est à débit variable, ledit débit étant fixé en fonction de la cartouche (210) de piégeage d'iode utilisée.

5. Système (1) de prélèvement selon l'une des revendications précédentes, dans lequel le module de prélèvement d'aérosols (100) comprend en outre un organe de commande (141) de la première pompe (140), un débitmètre, et une unité de commande (160), configurée pour moduler un débit de consigne de la première (140) pompe en fonction d'un taux de colmatage du filtre (130).

6. Système (1) de prélèvement selon l'une des revendications précédentes, dans lequel le dispositif de chauffage de l'air (240) s'écoulant dans le conduit de circulation (220) comprend un tube (241) s'étendant le long d'une portion dudit conduit, et un manchon chauffant (243) entourant ledit tube sur une portion de celui-ci.

7. Système (1) de prélèvement selon la revendication précédente, dans lequel le manchon chauffant (243) comprend une résistance chauffante ou est chauffé par induction.

8. Système (1) de prélèvement selon l'une des revendications 6 ou 7, dans lequel le tube (241) du dispositif de chauffage de l'air (240) comprend une pluralité de veines d'écoulement d'air (242) de section identique et réparties de manière homogène sur la section du tube (241).

9. Système de prélèvement selon la revendication précédente, dans lequel les veines d'écoulement d'air (242) du tube (241) du dispositif de chauffage de l'air (240) présentent une configuration en nid d'abeille.

10. Système (1) de prélèvement selon l'une des revendications précédentes, dans lequel le module de prélèvement d'iode (200) comprend en outre deux électrovannes (211, 212), positionnées respectivement en entrée et en sortie de la cartouche de prélèvement de l'iode (210), lesdites électrovannes étant adaptées pour isoler la cartouche (210) pour la protéger de l'humidité de l'air ambiant lorsqu'aucun prélèvement n'a lieu.

11. Système (1) de prélèvement selon la revendication 10, dans lequel le module de prélèvement d'iode (200) comprend en outre une unité de commande (260, 160) configurée pour contrôler les électrovannes (211, 212) pour sélectivement isoler ou mettre en communication la cartouche (210) avec les conduits disposés en entrée et en sortie de la cartouche.

12. Système (1) de prélèvement selon l'une des revendications précédentes, dans lequel le conduit de circulation d'air (220) comprend une paroi interne revêtue d'une couche de matériau anti-adhérent.

13. Système (1) selon l'une des revendications précédentes, dans lequel le dispositif (100) de prélèvement d'aérosols comprend en outre un dispositif de chauffage (150) de l'air traversant le filtre (130).

14. Procédé de prélèvement d'aérosols et d'iode gazeux contenus dans une atmosphère, le procédé étant mis en oeuvre par un système selon l'une des revendications précédentes, comprenant :
- avant le prélèvement, la fixation du débit de la deuxième pompe (230) du module de piégeage d'iode (200) en fonction de la cartouche (210) utilisée,
- pendant le prélèvement, la commande du dispositif de chauffage de l'air (240) en fonction d'un taux d'humidité de l'air circulant dans le conduit de circulation d'air (220).

15. Procédé de prélèvement d'aérosols et d'iode gazeux selon la revendication 14, mis en oeuvre par un système selon la revendication 11, comprenant en outre :
- lors du prélèvement, l'ouverture des électrovannes (211, 212) pour mettre en communication la cartouche avec les conduits disposés en entrée et en sortie de la cartouche, et
- après le prélèvement, la fermeture desdites électrovannes (211, 212) pour isoler hermétiquement la cartouche des conduits.

## Patentansprüche

1. System (1) zur Entnahme von Aerosolen und von gasförmigem Jod, die in einer Atmosphäre enthalten sind, umfassend:
- eine Aerosol-Entnahmevorrichtung (100), umfassend:
-- eine Luftzufuhrleitung (110), die mit der Atmosphäre in Fluidkommunikation steht,
-- eine erste Pumpe (140), die dafür ausgebildet ist, einen Hauptluftstrom mit einem Hauptluftdurchsatz zu entnehmen und in der Leitung zirkulieren zu lassen,
-- einen Filter (130), der in der Leitung angeordnet und dafür ausgebildet ist, Aerosole, die in dem den Filter durchquerenden Hauptluftstrom enthalten sind, zurückzuhalten, und
- ein Jod-Entnahmemodul (200), umfassend:
-- eine Jod-Fangkartusche (210), die eine Menge an Adsorptionsmaterial umfasst,
-- eine Luftzirkulationsleitung (220), die in Bezug auf den Hauptluftstrom stromabwärts des Filters (130) an die Luftzufuhrleitung (110) angeschlossen ist und sich zwischen der Leitung und der Kartusche erstreckt, wobei die Leitung (220) stromabwärts des Filters (130) von der Luftzufuhrleitung (110) getrennt eine Luftzirkulationsschleife bildet,
-- eine zweite Pumpe (230), die dafür ausgebildet ist, einen Sekundärluftstrom mit einem Sekundärluftdurchsatz innerhalb des Hauptluftstroms, der in der Luftzufuhrleitung (110) zirkuliert, zu entnehmen und den Sekundärdurchsatz in der Zirkulationsleitung (220) und der Kartusche (210) zirkulieren zu lassen,
-- eine Vorrichtung zum Heizen (240) der Luft, die in der Luftzirkulationsleitung (220) strömt, und
-- ein System zum Regeln (250) des Feuchtigkeitsgrades der Luft, die in der Luftzirkulationsleitung (220) zirkuliert, wobei das System dafür ausgebildet ist, die Vorrichtung zum Heizen (240) der in der Leitung strömenden Luft in Abhängigkeit vom Feuchtigkeitsgrad der Luft zu steuern.

2. Entnahmesystem (1) nach Anspruch 1, wobei das Regelsystem (250) dafür ausgebildet ist, die Vorrichtung zum Heizen der Luft (240) so zu steuern, dass der Feuchtigkeitsgrad der Luft, die in der Zirkulationsleitung (220) der Luft strömt, kleiner einem bestimmten Niveau gehalten wird.

3. Entnahmesystem (1) nach Anspruch 2, wobei das vom Regelsystem (250) festgelegte Niveau des Feuchtigkeitsgrades im Bereich zwischen 10 und 40 %, und vorzugsweise kleiner oder gleich 30 % beträgt.

4. Entnahmesystem (1) nach einem der vorstehenden Ansprüche, wobei die zweite Pumpe (230) des Jod-Entnahmemoduls (200) mit variablem Durchsatz ist, wobei der Durchsatz in Abhängigkeit von der verwendeten Jod-Fangkartusche (210) festgelegt wird.

5. Entnahmesystem (1) nach einem der vorstehenden Ansprüche, wobei das Aerosol-Entnahmemodul (100) weiter ein Glied zum Steuern (141) der ersten Pumpe (140), einen Durchsatzmesser, und eine Steuereinheit (160) umfasst, die dafür konfiguriert ist, einen Solldurchsatz der ersten (140) Pumpe in Abhängigkeit von einem Verstopfungsgrad des Filters (130) zu modulieren.

6. Entnahmesystem (1) nach einem der vorstehenden Ansprüche, wobei die Vorrichtung zum Heizen der in der Zirkulationsleitung (220) strömenden Luft (240) ein Rohr (241) umfasst, das sich entlang eines Abschnitts der Leitung erstreckt, und eine Heizmanschette (243), die das Rohr auf einem Abschnitt desselben umgibt.

7. Entnahmesystem (1) nach dem vorstehenden Anspruch, wobei die Heizmanschette (243) einen Heizwiderstand umfasst oder durch Induktion geheizt wird.

8. Entnahmesystem (1) nach einem der Ansprüche 6 oder 7, wobei das Rohr (241) der Vorrichtung zum Heizen der Luft (240) eine Vielzahl von Luftströmungsadern (242) umfasst, die von identischem Querschnitt und in homogener Weise über den Querschnitt des Rohres (241) verteilt sind.

9. Entnahmesystem nach dem vorstehenden Anspruch, wobei die Luftströmungsadern (242) des Rohres (241) der Vorrichtung zum Heizen der Luft (240) eine Wabenkonfiguration aufweisen.

10. Entnahmesystem (1) nach einem der vorstehenden Ansprüche, wobei das Jod-Entnahmemodul (200) weiter zwei Magnetventile (211, 212) umfasst, die jeweils am Eingang und am Ausgang der Jod-Entnahmekartusche (210) positioniert sind, wobei die Magnetventile dafür ausgebildet sind, die Kartusche (210) zu isolieren, um sie vor der Feuchtigkeit der Umgebungsluft zu schützen, wenn keine Entnahme stattfindet.

11. Entnahmesystem (1) nach Anspruch 10, wobei das Jod-Entnahmemodul (200) weiter eine Steuereinheit (260, 160) umfasst, die dafür konfiguriert ist, die Magnetventile (211, 212) so zu steuern, dass sie die Kartusche (210) wahlweise isolieren oder mit den am Eingang und am Ausgang der Kartusche angeordneten Leitungen in Kommunikation bringen.

12. Entnahmesystem (1) nach einem der vorstehenden Ansprüche, wobei die Luftzirkulationsleitung (220) eine Innenwand umfasst, die mit einer Schicht aus Antihaftmaterial beschichtet ist.

13. System (1) nach einem der vorstehenden Ansprüche, wobei die Aerosol-Entnahmevorrichtung (100) weiter eine Vorrichtung um Heizen (150) der den Filter (130) durchquerenden Luft umfasst.

14. Verfahren zur Entnahme von Aerosolen und von gasförmigem Jod, die in einer Atmosphäre enthalten sind, wobei das Verfahren von einem System nach einem der vorstehenden Ansprüche umgesetzt wird, umfassend:
- vor der Entnahme das Festlegen des Durchsatzes der zweiten Pumpe (230) des Jod-Fangmoduls (200) in Abhängigkeit von der verwendeten Kartusche (210),
- während der Entnahme das Steuern der Vorrichtung zum Heizen der Luft (240) in Abhängigkeit von einem Feuchtigkeitsgrad der Luft, die in der Luftzirkulationsleitung (220) zirkuliert.

15. Verfahren zur Entnahme von Aerosolen und von gasförmigem Jod nach Anspruch 14, das von einem System nach Anspruch 11 umgesetzt wird, weiter umfassend:
- bei der Entnahme das Öffnen der Magnetventile (211, 212), um die Kartusche mit den am Eingang und am Ausgang der Kartusche angeordneten Leitungen in Kommunikation zu bringen, und
- nach der Entnahme das Schließen der Magnetventile (211, 212), um die Kartusche hermetisch von den Leitungen zu isolieren.

## Claims

1. System (1) for sampling aerosols and gaseous iodine contained in an atmosphere comprising:
- a device (100) for sampling aerosols comprising:
-- an air supply duct (110), in fluid communication with the atmosphere,
-- a first pump (140) adapted to sample and make a main air stream circulate with a main air flow in said duct,
-- a filter (130) disposed in said duct and adapted to retain the aerosols contained in the main air stream crossing said filter, and
- an iodine sampling module (200), comprising:
-- a cartridge (210) for trapping iodine containing a quantity of adsorbent material,
-- an air circulation duct (220), connected to the air supply duct (110) downstream of the filter (130) with respect to the main air stream, and extending between said duct and the cartridge, the duct (220) forming an air circulation loop downstream of the filter (130) separately from the air supply duct (110),
-- a second pump (230) adapted to sample a secondary air stream with a secondary air flow, within the main air stream circulating in the air supply duct (110), and make said secondary flow circulate in the circulation duct (220) and the cartridge (210),
-- a device for heating (240) the air flowing in the air circulation duct (220), and
-- a system for regulating (250) the humidity rate of the air circulating in the air circulation duct (220), said system being adapted to control the device for heating (240) the air flowing in said duct according to the humidity rate of the air.

2. Sampling system (1) according to claim 1, wherein the regulation system (250) is adapted to control the device for heating the air (240) to keep the humidity rate of the air flowing in the air circulation duct (220) lower than a determined level.

3. Sampling system (1) according to claim 2, wherein the level of the humidity rate set by the regulation system (250) is between 10 and 40% and preferably lower than or equal to 30%.

4. Sampling system (1) according to one of the preceding claims, wherein the second pump (230) of the iodine sampling module (200) has a variable flow, said flow being set according to the iodine trapping cartridge (210) used.

5. Sampling system (1) according to one of the preceding claims, wherein the aerosol sampling module (100) further comprises a member for controlling (141) the first pump (140), a flow sensor, and a control unit (160), configured to modulate a setpoint flow of the first (140) pump according to a clogging rate of the filter (130).

6. Sampling system (1) according to one of the preceding claims, wherein the device for heating the air (240) flowing in the circulation duct (220) comprises a tube (241) extending along a portion of said duct, and a heating sleeve (243) surrounding said tube over a portion of it.

7. Sampling system (1) according to the preceding claim, wherein the heating sleeve (243) comprises a heating resistance or is heated by induction.

8. Sampling system (1) according to one of claims 6 or 7, wherein the tube (241) of the air heating device (240) comprises a plurality of air flow seams (242) of identical cross-section and distributed homogenously over the section of the tube (241).

9. Sampling system according to the preceding claim, wherein the air flow seams (242) of the tube (241) of the air heating device (240) have a honeycomb configuration.

10. Sampling system (1) according to one of the preceding claims, wherein the iodine sampling module (200) further comprises two solenoid valves (211, 212) positioned respectively at the inlet and at the outlet of the iodine sampling cartridge (210), said solenoid valves being adapted to isolate the cartridge (210) to protect it from the humidity of the ambient air when no sampling occurs.

11. Sampling system (1) according to claim 10, wherein the iodine sampling module (200) further comprises a control unit (260, 160) configured to control the solenoid valves (211, 212) to selectively isolate or put the cartridge (210) in communication with the ducts disposed at the inlet and at the outlet of the cartridge.

12. Sampling system (1) according to one of the preceding claims, wherein the air circulation duct (220) comprises an inner wall coated with a layer of non-stick material.

13. System (1) according to one of the preceding claims, wherein the aerosol sampling device (100) further comprises a device for heating (150) the air crossing the filter (130).

14. Method for sampling aerosols and gaseous iodine contained in an atmosphere, the method being implemented by a system according to one of the preceding claims, comprising
- before sampling, the setting of the flow of the second pump (230) of the iodine trapping module (200) according to the cartridge (210) used,
- during sampling, the controlling of the air heating device (240) according to a humidity rate of the air circulating in the air circulation duct (220).

15. Method for sampling aerosols and gaseous iodine according to claim 14, implemented by a system according to claim 11, further comprising:
- during sampling, the opening of the solenoid valves (211, 212) to put the cartridge in communication with the ducts disposed at the inlet and at the outlet of the cartridge, and
- after sampling, the closing of said solenoid valves (211, 212), to hermetically isolate the cartridge of the ducts.
